# EUROPEAN PATENT APPLICATION

(11) **EP 3 231 606 A1**
(43) Date of publication of application: **18.10.2017**
(21) Application number: 15866595.0
(22) Date of filing: 09.12.2015
(51) Int. Cl.: B32B 25/10, B32B 25/20, C09D 5/00, C09D 7/12, C09D 183/04, C09D 183/05, C09D 183/07, D06M 15/643, D06N 3/00

(54) **METHOD FOR PRODUCING FABRIC SUBSTRATE MOLDED PRODUCT COATED WITH SILICONE RUBBER, AND ARTIFICIAL LEATHER-LIKE SHEET MOLDED PRODUCT**

(30) Priority: 12.12.2014 JP 2014251465
(71) Applicant: Shin-Etsu Chemical Co., Ltd., Tokyo 100-0004 (JP)
(72) Inventor: HUNG, Shi-Tsung, Jubei City Hsinchu County (TW); HUANG, Po-Cheng, Hukou Township Hsinchu County (TW); KAO, Ming-Chih, Hukou Township Hsinchu County (TW); IGARASHI, Minoru, Annaka-shi Gunma 379-0224 (JP)
(74) Representative: Stoner, Gerard Patrick
(86) International application number: PCT/JP2015/084549
(87) International publication number: WO 2016/093281

(57) **Abstract**

Provided is a method for producing a fabric substrate molded product coated with silicone rubber, wherein the adherence of dust, flashes during molding, and foreign matter is prevented because the obtained cured coating film has surface lubricity, and breaking and cracking do not occur when the fabric substrate is deformed because the obtained cured coating film has elongation.

This method for producing a fabric substrate molded product coated with silicone rubber, in which method the surface of the fabric substrate is coated with a first coating layer and a second coating layer by forming a first coating layer, which comprises a cured product of a liquid silicone rubber composition, on at least one surface of the fabric substrate, and then forming a second coating layer, which comprises a cured product of a silicone rubber composition, on the outer surface of the first coating layer, is characterized in that the first coating layer is a cured product of a liquid silicone rubber composition that contains an adhesiveness-conferring component, and the second coating layer is a cured product of a silicone rubber composition that contains a silicone resin.

## Description

### TECHNICAL FIELD

This invention relates to a method of manufacturing a silicone rubber-coated fabric-based molded product that can be suitably used as, for example, a synthetic leather-like sheet-formed product. The invention relates more particularly to a method of manufacturing a silicone rubber-coated fabric-based molded product, which method is able, by applying a silicone rubber coating layer onto the surface of a fabric base, to impart slip characteristics that prevent dust and foreign matter from adhering, and moreover provides a cured film that conforms well during deformation of a molded article, does not incur surface checking or cracking, and has a good adhesion. The invention also relates to a synthetic leather-like sheet-formed product in which a silicone rubber coating layer has been laminated onto the surface of a fabric base.

### BACKGROUND ART

One method for ameliorating the surface tack of molded articles involves coating a silicone varnish, but the surface of the applied film has a glossy appearance and lacks sufficient slip. Moreover, because the silicone varnish has substantially no stretch, it is unable to follow the deformation and elongation of molded articles, gaskets and packings, thus giving rise to surface checking and cracking. JP-A 2010-100667 (Patent Document 1) discloses an applied film having surface slip that is composed of a phenyl block polymer to which a small amount of dimethylpolysiloxane has been added. However, checking and cracking similarly arise in this as well.

In JP-A H06-248186 (Patent Document 2), an organotitanium compound is added to a phenyl block polymer and a cured product having asperities on the surface is formed, giving an applied film with antistatic properties. However, this similarly incurs check and crack formation.

JP-A 2004-143331 (Patent Document 3) discloses a condensation curing composition based on the condensation product of an organosiloxane consisting of R₃SiO_{1/2} units (wherein each R is independently a substituted or unsubstituted monovalent hydrocarbon group of 1 to 6 carbon atoms) and SiO_{4/2} units with a diorganopolysiloxane capped at the ends of the molecular chain with functional group-containing silyl groups. However, although an applied film having a high strength and high elongation can be obtained, the film does not exhibit surface slip. By adding a siloxane with phenyl groups or a polyoxyalkylene structure that does not dissolve in dimethylsiloxane and has bleed properties, the ability to prevent biofouling can be obtained, but dust, molding flash and foreign matter tend to adhere more readily.

In connection with the composition described in JP-A 2004-143331, the imparting of surface texture by adding a filler such as wet silica or dry silica instead of a bleeding ingredient, surface modification by adding a phenyl block polymer, and surface texturization by adding a titanate ester were investigated, but surface slip was not obtainable with any of these; instead, undesirable effects such as surface tack and crack formation arose.

### PRIOR ART DOCUMENTS

### PATENT DOCUMENTS

Patent Document 1: JP-A 2010-100667
Patent Document 2: JP-A H06-248186
Patent Document 3: JP-A 2004-143331

### SUMMARY OF THE INVENTION

### PROBLEMS TO BE SOLVED BY THE INVENTION

In light of the above circumstances, one object of this invention is to provide a method of manufacturing a silicone rubber-coated fabric-based molded product which, because the resulting cured film (silicone rubber coating layer) has surface slip, prevents dust, molding flash and foreign matter from adhering, and moreover which, because the resulting cured film has stretch, does not give rise to checking and cracking during deformation of the fabric base. Another object is to provide a synthetic leather-like sheet-formed product in which a silicone rubber coating layer has been laminated onto the surface of a fabric base.

### MEANS FOR SOLVING THE PROBLEMS

The inventors have conducted extensive investigations in order to achieve the above objects. As a result, they have discovered that by forming, on at least one surface of a fabric base, a first coating layer consisting of the cured form of an adhesion-imparting ingredient-containing liquid silicone rubber composition in order to increase adherence, and by also laminating onto the outside surface of this first coating layer a second coating layer consisting of the cured form of a silicone resin-containing silicone rubber composition, the surface slip of the cured film dramatically improves and adherence to the fabric base is also good. In addition, because the cured film has stretch, checking and cracking do not arise.

Accordingly, this invention provides the following methods of manufacturing silicone rubber-coated fabric-based molded products, and the following synthetic leather-like sheet-formed products in which silicone rubber coating layers have been laminated onto a surface of a fabric base and which are produced by these manufacturing methods.
[1] A method of manufacturing a fabric-based molded product comprising the steps of applying an adhesion-imparting ingredient-containing liquid silicone rubber composition onto at least one surface of a fabric base and curing the composition so as to form a first coating layer, and subsequently applying a silicone resin-containing silicone rubber composition onto an outside surface of the first coating layer and curing the silicone resin-containing silicone rubber composition so as to form a second coating layer.
[2] A method of manufacturing a fabric-based molded product comprising the steps of applying a silicone resin-containing silicone rubber composition onto a surface of a release liner and curing the composition so as to form a second coating layer, and subsequently applying an adhesion-imparting ingredient-containing liquid silicone rubber composition onto an outside surface of the second coating layer, laminating thereon a fabric base and curing the liquid silicone rubber composition so as to form a first coating layer.
[3] A method of manufacturing a fabric-based molded product comprising the steps of applying an adhesion-imparting ingredient-containing liquid silicone rubber composition onto at least one side of a fabric base and curing the composition so as to form a first coating layer, and applying a silicone resin-containing silicone rubber composition onto a surface of a release liner, laminating the silicone resin-containing silicone rubber composition-coated surface of the release liner onto the first coating layer and then curing the silicone resin-containing silicone rubber composition so as to form a second coating layer on the first coating layer.
[4] The method of manufacturing a silicone rubber-coated fabric-based molded product of any of [1] to [3], wherein the liquid silicone rubber composition used in the first coating layer comprises:
   (1-A) 100 parts by weight of an organopolysiloxane which contains at least two silicon-bonded alkenyl groups per molecule and has a viscosity at 23°C of from 0.1 to 2,000 Pa·s,
   (1-B) from 0.1 to 30 parts by weight of an organosilicon compound of from 1 to 100 silicon atoms which has, per molecule, at least one silicon-bonded hydrogen atom and at least one arylene skeleton and/or a trivalent or tetravalent group with the arylene skeleton from which 1 or 2 hydrogen atoms have been removed,
   (1-C) from 0 to 20 parts by weight of an organohydrogenpolysiloxane which has at least two silicon-bonded hydrogen atoms per molecule and lacks an arylene skeleton and a trivalent or tetravalent group with the arylene skeleton from which 1 or 2 hydrogen atoms have been removed,
   (1-D) from 0 to 100 parts by weight of a fine reinforcing silica powder, and
   (1-E) a catalytic amount of an addition reaction catalyst; and wherein the silicone rubber composition used in the second coating layer comprises:
   (2-A) 100 parts by weight of an organopolysiloxane containing at least two silicon-bonded alkenyl groups per molecule,
   (2-B) from 1 to 300 parts by weight of a silicone resin which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole per mole of SiO_{4/2} units,
   (2-C) from 0.1 to 50 parts by weight of an organohydrogenpolysiloxane containing at least two silicon-bonded hydrogen atoms per molecule, and
   (2-D) a catalytic amount of an addition reaction catalyst.
[5] The method of manufacturing a silicone rubber-coated fabric-based molded product of [4], wherein component (1-B) is an organosilicon compound of from 1 to 100 silicon atoms which has at least one silicon-bonded hydrogen atom per molecule, has at least one arylene skeleton and/or a trivalent or tetravalent group with the arylene skeleton from which 1 or 2 hydrogen atoms have been removed per molecule, and has one, two or more functional groups selected from among epoxy, alkoxysilyl, ester, acrylic, methacrylic, carboxylic anhydride, isocyanate, amino and amide groups.
[6] The method of manufacturing a silicone rubber-coated fabric-based molded product of any of [1] to [5], wherein the cured form of the silicone rubber composition used in the first coating layer has a hardness, as measured with a type A durometer in accordance with JIS K6249, of 50 or more.
[7] The method of manufacturing a silicone rubber-coated fabric-based molded product of any of [1] to [6], wherein the cured form of the silicone rubber composition used in the second coating layer has a hardness, as measured with a type A durometer in accordance with JIS K6249, of 50 or more.
[8] A synthetic leather-like sheet-formed product comprising, as silicone rubber coating layers, a first coating layer formed on a surface of a fabric base and a second coating layer laminated onto the first coating layer, wherein the first coating layer is a cured form of an adhesion-imparting ingredient-containing liquid silicone rubber composition, and the second coating layer is a cured form of a silicone resin-containing silicone rubber composition.
[9] The synthetic leather-like sheet-formed product of [8], wherein the liquid silicone rubber composition used in the first coating layer comprises:
   (1-A) 100 parts by weight of an organopolysiloxane which contains at least two silicon-bonded alkenyl groups per molecule and has a viscosity at 23°C of from 0.1 to 2,000 Pa·s,
   (1-B) from 0.1 to 30 parts by weight of an organosilicon compound of from 1 to 100 silicon atoms which has, per molecule, at least one silicon-bonded hydrogen atom and at least one arylene skeleton and/or a trivalent or tetravalent group with the arylene skeleton from which 1 or 2 hydrogen atoms have been removed,
   (1-C) from 0 to 20 parts by weight of an organohydrogenpolysiloxane which has at least two silicon-bonded hydrogen atoms per molecule and lacks an arylene skeleton and a trivalent or tetravalent group with the arylene skeleton from which 1 or 2 hydrogen atoms have been removed,
   (1-D) from 0 to 100 parts by weight of a fine reinforcing silica powder, and
   (1-E) a catalytic amount of an addition reaction catalyst;
   and wherein the silicone rubber composition used in the second coating layer comprises:
   (2-A) 100 parts by weight of an organopolysiloxane containing at least two silicon-bonded alkenyl groups per molecule,
   (2-B) from 1 to 300 parts by weight of a silicone resin which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole per mole of SiO_{4/2} units,
   (2-C) from 0.1 to 50 parts by weight of an organohydrogenpolysiloxane containing at least two silicon-bonded hydrogen atoms per molecule, and
   (2-D) a catalytic amount of an addition reaction catalyst.
[10] The synthetic leather-like sheet-formed product of [9], wherein component (1-B) is an organosilicon compound of 1 to 100 silicon atoms which has at least one silicon-bonded hydrogen atom per molecule, has at least one arylene skeleton and/or a trivalent or tetravalent group with the arylene skeleton from which 1 or 2 hydrogen atoms have been removed per molecule, and has one, two or more functional groups selected from among epoxy, alkoxysilyl, ester, acrylic, methacrylic, carboxylic anhydride, isocyanate, amino and amide groups.
[11] The synthetic leather-like sheet-formed product of any of [8] to [10], wherein the cured form of the silicone rubber composition used in the first coating layer has a hardness, as measured with a type A durometer in accordance with JIS K6249, of 50 or more.
[12] The synthetic leather-like sheet-formed product of any of [8] to [11], wherein the cured form of the silicone rubber composition used in the second coating layer has a hardness, as measured with a type A durometer in accordance with JIS K6249, of 50 or more.

### ADVANTAGEOUS EFFECTS OF THE INVENTION

In the manufacturing method of the invention, adhesion between one of the cured films obtained and the fabric base is good and the other cured film obtained has a good surface slip, thus preventing the adherence of dust, molding flash and foreign matter. Moreover, because the resulting cured films have good stretch, when the film-forming silicone rubber compositions of the invention are applied onto the surface of articles such as molded products, gaskets and packings and then cured, silicone rubber-coated fabric-based molded products can be obtained in which checking and cracking do not arise even during deformation of the article. Such molded products are useful as, for example, synthetic leather-like sheet-formed products.

### EMBODIMENT FOR CARRYING OUT THE INVENTION

The invention is described more fully below.

The inventive method of manufacturing a silicone rubber-coated fabric-based molded product includes the steps of applying an adhesion-imparting ingredient-containing liquid silicone rubber composition onto at least one surface of a fabric base and curing the composition so as to form a first coating layer, and subsequently applying a silicone resin-containing silicone rubber composition onto an outside surface of the first coating layer and curing the silicone resin-containing silicone rubber composition so as to form a second coating layer; or by including the steps of applying a silicone resin-containing silicone rubber composition onto a surface of a release liner and curing the composition so as to form a second coating layer, and subsequently applying an adhesion-imparting ingredient-containing liquid silicone rubber composition onto an outside surface of the second coating layer, laminating thereon a fabric base and curing the liquid silicone rubber composition so as to form a first coating layer.

Alternatively, the method of the invention may include the steps of applying an adhesion-imparting ingredient-containing liquid silicone rubber composition onto at least one side of a fabric base and curing the composition so as to form a first coating layer, and applying a silicone resin-containing silicone rubber composition onto a surface of the release liner, laminating the silicone resin-containing silicone rubber composition-coated surface of the release liner onto the first coating layer and then curing the silicone resin-containing silicone rubber composition so as to form a second coating layer on the first coating layer.

The liquid silicone rubber composition used in the first coating layer is an adhesion-imparting ingredient-containing liquid silicone rubber composition for bonding together the fabric base and the cured form of the silicone rubber composition that serves as the second coating layer. A liquid silicone rubber composition that includes components (1-A), (1-B) and (1-E) below, and optionally includes also components (1-C) and/or (1-D), may be used as the liquid silicone rubber composition used in the first coating layer. In particular, it is preferable to use component (1-B) below as the adhesion-imparting ingredient.

Components (1-A) to (1-E) are as follows:
(1-A) an organopolysiloxane which contains at least two silicon-bonded alkenyl groups per molecule;
(1-B) an organosilicon compound of from 1 to 100 silicon atoms which has, per molecule, at least one silicon-bonded hydrogen atom and at least one arylene skeleton and/or a trivalent or tetravalent group with the arylene skeleton from which 1 or 2 hydrogen atoms have been removed;
(1-C) an organohydrogenpolysiloxane which has at least two silicon-bonded hydrogen atoms per molecule and lacks an arylene skeleton and a trivalent or tetravalent group with the arylene skeleton from which 1 or 2 hydrogen atoms have been removed;
(1-D) a fine reinforcing silica powder; and
(1-E) an addition reaction catalyst.

### [Component (1-A)]

Component (1-A) is an organopolysiloxane which contains at least an average of two silicon-bonded alkenyl groups per molecule and serves as the base polymer of the liquid silicone rubber composition. An organopolysiloxane having the following average compositional formula (I) may be used.

R¹ₐSiO_{(4-a)/2} (I)

In this formula, each R¹ is a like or unlike substituted or unsubstituted monovalent hydrocarbon group having 1 to 10, preferably 1 to 8, carbon atoms; and the subscript 'a' is a positive number in the range of 1.5 to 2.8, preferably 1.8 to 2.5, and more preferably 1.95 to 2.05.

Here, illustrative examples of the substituted or unsubstituted monovalent hydrocarbon groups that are bonded to the silicon atom and represented above as R¹ include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; alkenyl groups such as vinyl, allyl, propenyl, isopropenyl, butenyl, hexenyl, cyclohexenyl and octenyl groups; and any of these groups in which some or all of the hydrogen atoms are substituted with fluorine, bromine, chlorine or other halogen atoms, cyano groups or the like, such as chloromethyl, chloropropyl, bromoethyl, trifluoropropyl and cyanoethyl groups. Preferably, at least 90 mol% of all R¹ groups are methyl groups.

It is critical for at least two of the R¹ groups to be alkenyl groups. The alkenyl groups preferably have from 2 to 8 carbon atoms, more preferably have from 2 to 6 carbon atoms, and most preferably are vinyl groups.

The alkenyl group content in the organopolysiloxane is set to preferably from 1.0×10⁻⁶ mol/g to 10.0×10⁻⁴ mol/g, and especially from 1.0×10⁻⁵ mol/g to 8.0×10⁻⁴ mol/g. When the alkenyl group content is below 1.0×10⁻⁶ mol/g, the rubber hardness may be too low, with the cured product becoming gel-like. On the other hand, at an alkenyl group content greater than 10.0×10⁻⁴ mol/g, the crosslink density may be too high, resulting in a rubber having a high hardness. These alkenyl groups may be bonded to silicon atoms at the ends of the molecular chain, may be bonded to non-terminal silicon atoms along the molecular chain, or may be bonded to both.

This organopolysiloxane preferably has a structure which is basically a straight-chain structure wherein both ends of the molecular chain are capped with triorganosiloxy groups (R¹₃SiO_{1/2}) and the main chain consists of recurring diorganosiloxane units (R¹₂SiO_{2/2}), although it may have a branched chain structure or a cyclic structure in portions of the molecule.

With regard to the molecular weight, the average degree of polymerization (which refers, here and below, to the number-average degree of polymerization) is not more than 1,500, generally from 100 to 1,500, and preferably from 150 to 1,000. At below 100, the cured product may not achieve a sufficiently rubbery feel; at above 1,500, the viscosity is high and molding may be difficult to carry out. The number-average degree of polymerization and number-average molecular weight can be determined by calculation relative to the values obtained for polystyrene by gel permeation chromatography (GPC) using toluene as the developing solvent.

Also, the organopolysiloxane has a viscosity at 23°C of preferably from 0.1 to 2,000 Pa·s, and especially from 0.5 to 500 Pa·s. In this invention, the viscosity can be measured with a rotational viscometer (examples of which include BL, BH and BS viscometers, cone-and-plate viscometers, and rheometers). The same applies below.

### [Component (1-B)]

Component (1-B), which serves as an adhesion-imparting ingredient, is an organosilicon compound of from 1 to 100, preferably 2 to 30, silicon atoms that has, per molecule, at least one silicon-bonded hydrogen atom (i.e., SiH group) and at least one arylene skeleton or a trivalent or tetravalent group with the arylene skeleton from which 1 or 2 hydrogen atoms have been removed (the group generally having a divalent to tetravalent aromatic cyclic skeleton).

The arylene skeleton or the trivalent or tetravalent group with the arylene skeleton from which 1 or 2 hydrogen atoms have been removed is exemplified by the following.

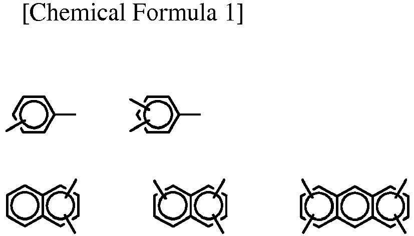

It is preferable to use, as the adhesion-imparting ingredient, an organosilicon compound which has at least one, generally about 1 to 100, preferably about 2 to 50, and more preferably about 2 to 30, SiH groups per molecule, and which also has at least one, and preferably about 1 to 4, arylene skeletons and/or trivalent or tetravalent groups with the arylene skeleton from which 1 or 2 hydrogen atoms have been removed per molecule. In addition, the organosilicon compound may optionally have one, two or more functional groups selected from among glycidoxy and other epoxy groups, trimethoxysilyl, triethoxysilyl, methyldimethoxysilyl and other alkoxysilyl groups, ester groups, acrylic groups, methacrylic groups, carboxylic anhydride groups, isocyanate groups, amino groups and amide groups. Such organosilicon compounds are exemplified by linear or cyclic organosiloxane oligomers and organoalkoxysilanes which have about 1 to 100, preferably about 2 to 50, and especially about 4 to 30, silicon atoms.

Illustrative examples include the compounds shown below: 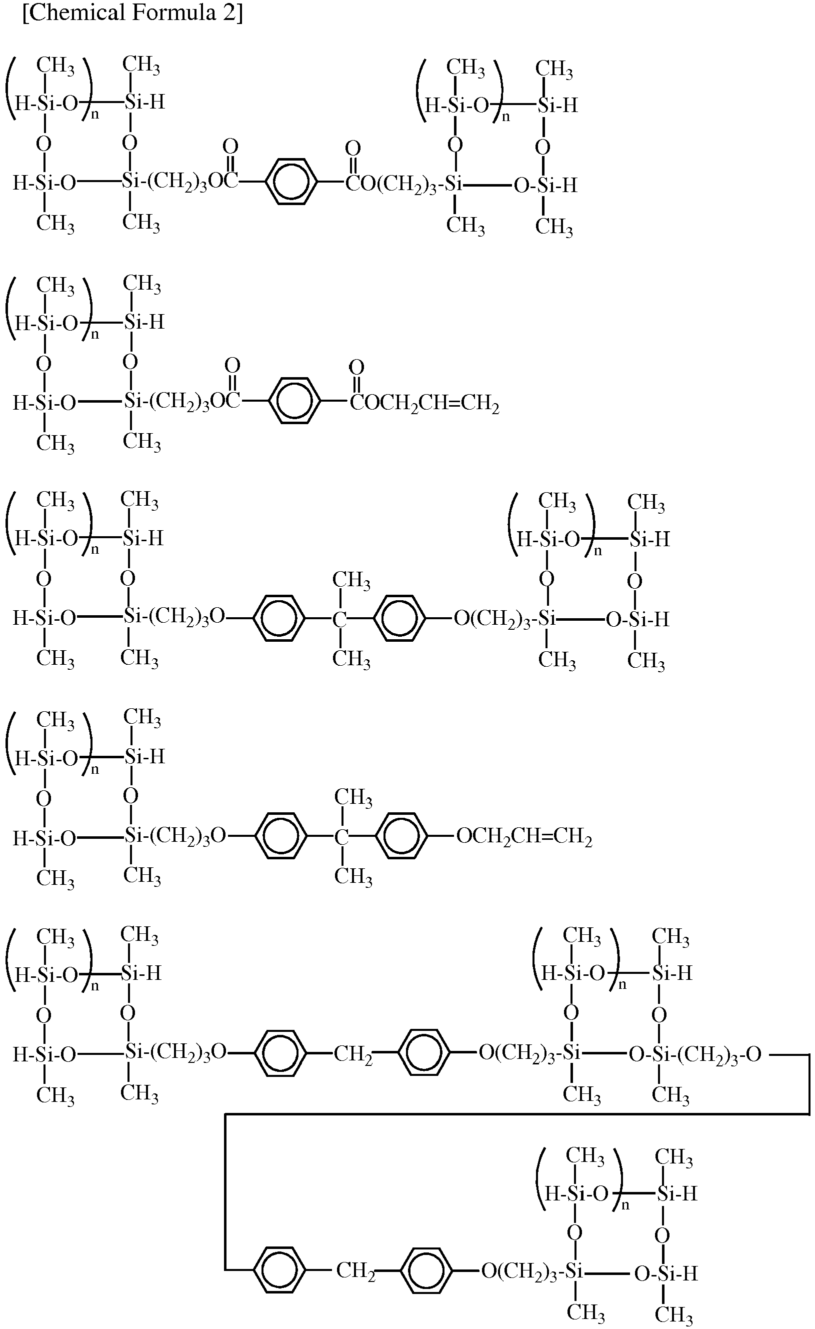 (wherein n is from 1 to 4), 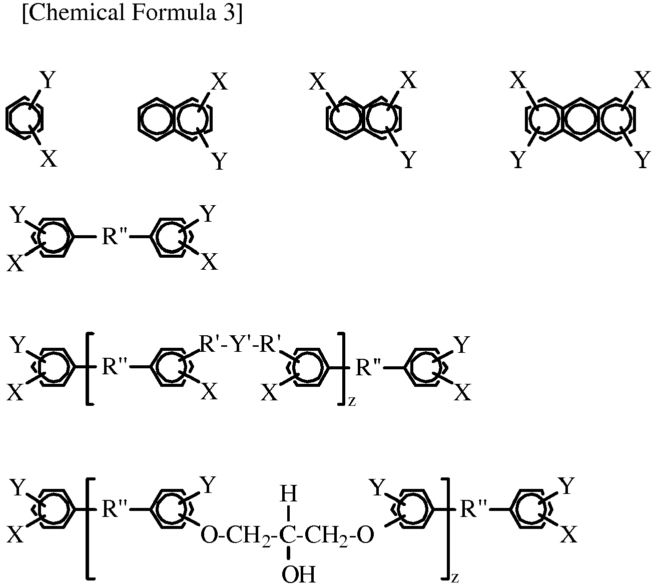 [wherein X is 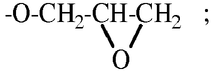 Y is a group represented by 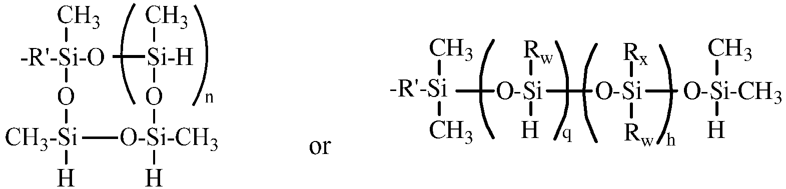 (wherein n is from 1 to 4; R' is a group selected from among the following: 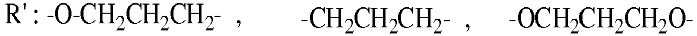 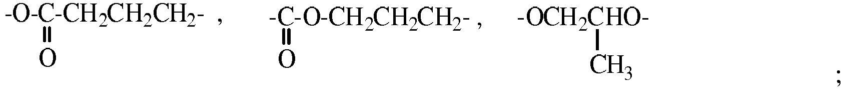 R_{w} and Rₓ are substituted or unsubstituted monovalent hydrocarbon groups; and q is from 1 to 50 and h is from 0 to 100, with q preferably being from 1 to 20 and h preferably being from 1 to 50); R" is a group selected from among 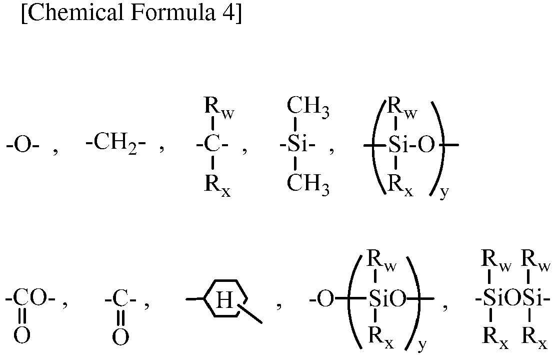 (wherein R_{w} and Rₓ are as defined above, and y is from 0 to 100); Y' is 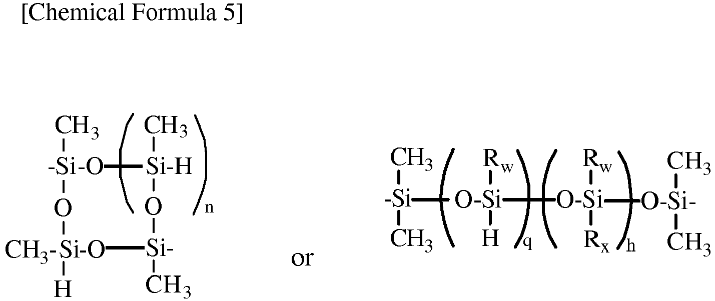 (wherein n is from 1 to 4, and R_{w}, Rₓ, q and h are as defined above); and z is from 1 to 10].

In addition, organosilicon compounds which contain, for example, alkoxysilyl groups (e.g., trimethoxysilyl, triethoxysilyl, methyldimethoxysilyl), acrylic groups, methacrylic groups, ester groups, carboxylic anhydride groups, isocyanate groups, amino groups and amide groups may also be used as this compound.

The substituted or unsubstituted monovalent hydrocarbon groups represented by R_{w} and Rₓ above are exemplified by the same groups as for R¹, including alkyl, aryl, aralkyl and alkenyl groups of preferably 1 to 12, and especially 1 to 8, carbon atoms, and also by substituted monovalent hydrocarbon groups such as alkoxy, acrylic, methacrylic, acryloyl, methacryloyl, amino and alkylamino groups.

The SiH group content within the organosilicon compound is preferably set to from 0.001 to 0.02 mol/g, and especially from 0.002 to 0.01 mol/g. When the SiH group content is too small or too large, the adhesive strength may decrease.

The content of component (1-B) per 100 parts by weight of component (1-A) is from 0.1 to 30 parts by weight, preferably from 0.2 to 20 parts by weight, and more preferably from 0.3 to 10 parts by weight. At a content below 0.1 part by weight, sufficient adhesion may not be obtained, whereas a content of more than 30 parts by weight may lead to a decline in the physical properties.

### [Component (1-C)]

Component (1-C) is an organohydrogenpolysiloxane which has at least 2, and preferably 3 or more, silicon-bonded hydrogen atoms (SiH groups) per molecule and lacks an arylene skeleton and a trivalent or tetravalent group with the arylene skeleton from which 1 or 2 hydrogen atoms have been removed (thus differing from component (1-B)). Use may be made of hitherto known organohydrogenpolysiloxanes of the average compositional formula (II) below.

R²_{b}H_{c}SiO_{(4-b-c)/2} (II)

Here, R² is a substituted or unsubstituted monovalent hydrocarbon group of 1 to 8 carbon atoms which preferably has no aliphatic unsaturated bonds. Illustrative examples include unsubstituted monovalent hydrocarbon groups such as methyl, ethyl, propyl, isopropyl, butyl, isobutyl, tert-butyl, pentyl, hexyl and other alkyl groups, cyclohexyl and other cycloalkyl groups, phenyl and other aryl groups, and benzyl and other aralkyl groups; and substituted monovalent hydrocarbon groups such as substituted alkyl groups in which at least some of the hydrogen atoms on the above monovalent hydrocarbon groups have been substituted with halogen atoms, cyano groups or the like, such as 3,3,3-trifluoropropyl and cyanomethyl groups.

In the above formula, the subscripts 'b' and 'c' are positive numbers which satisfy the following conditions: b is from 0.7 to 2.1, c is from 0.01 to 1.0, and the sum b+c is from 0.8 to 3.0. The subscript 'b' is preferably from 0.8 to 2.0. The subscript 'c' is preferably from 0.10 to 1.0, more preferably from 0.18 to 1.0, and even more preferably from 0.2 to 1.0. The sum b+c is preferably from 1.0 to 2.5.

The organohydrogenpolysiloxane has a molecular structure which may be linear, cyclic, branched, or a three-dimensional network structure. Preferred use can be made of an organohydrogenpolysiloxane which is liquid at room temperature and wherein the number of silicon atoms per molecule (or the degree of polymerization) is about 2 to 300, and especially about 4 to 200. The silicon-bonded hydrogen atoms (SiH groups) may be positioned at the ends of the molecular chain or on side chains (non-terminal positions along the molecular chain), or may be positioned at both. The organohydrogenpolysiloxane used has at least two (generally from 2 to 300), preferably at least three (e.g., from 3 to 200), and more preferably about 4 to 150, SiH groups per molecule.

The SiH group content in the organohydrogenpolysiloxane is preferably set to from 0.001 to 0.020 mol/g, and especially from 0.002 to 0.017 mol/g. When the SiH group content is too low, crosslinking may be inadequate. On the other hand, when it is too high, the physical properties may be unstable.

Examples of this organohydrogenpolysiloxane include 1,1,3,3-tetramethyldisiloxane, 1,3,5,7-tetramethylcyclotetrasiloxane, methylhydrogencyclopolysiloxane, methylhydrogensiloxane-dimethylsiloxane cyclic copolymers, tris(dimethylhydrogensiloxy)methylsilane, tris(dimethylhydrogensiloxy)phenylsilane, methylhydrogenpolysiloxanes capped at both ends with trimethylsiloxy groups, dimethylsiloxane-methylhydrogensiloxane copolymers capped at both ends with trimethylsiloxy groups,
dimethylpolysiloxanes capped at both ends with dimethylhydrogensiloxy groups, dimethylsiloxane-methylhydrogensiloxane copolymers capped at both ends with dimethylhydrogensiloxy groups,
methylhydrogensiloxane-diphenylsiloxane copolymers capped at both ends with trimethylsiloxy groups,
methylhydrogensiloxane-diphenylsiloxane-dimethylsiloxane copolymers capped at both ends with trimethylsiloxy groups,
cyclic methylhydrogenpolysiloxanes,
cyclic methylhydrogensiloxane-dimethylsiloxane copolymers,
cyclic methylhydrogensiloxane-diphenylsiloxane-dimethylsiloxane copolymers, copolymers consisting of (CH₃)₂HSiO_{1/2} units and SiO_{4/2} units,
copolymers consisting of (CH₃)₂HSiO_{1/2} units, SiO_{4/2} units and (C₆H₅)SiO_{3/2} units, and any of these example compounds in which some or all of the methyl groups are replaced with other alkyl groups such as ethyl and propyl groups or with aryl groups such as phenyl groups.

Illustrative examples of such organohydrogenpolysiloxanes include compounds of the following structural formulas. 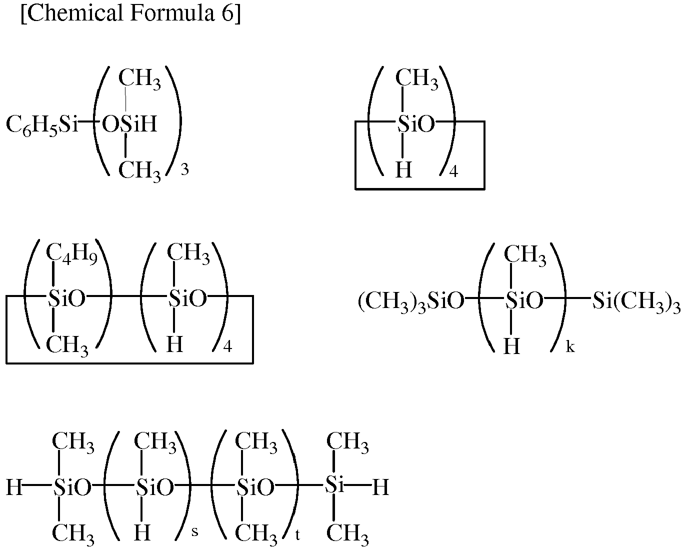 In these formulas, the subscript 'k' is an integer from 2 to 10, and the subscripts 's' and 't' are each integers from 0 to 10.

This organohydrogenpolysiloxane preferably has a viscosity at 23°C of from 0.5 to 10,000 mPa·s, and especially from 1 to 300 mPa·s. When the viscosity is too low, the resulting composition may have a low viscosity; when it is too high, compounding may be difficult.

The organohydrogenpolysiloxane serving as component (1-C) is included in an amount of from 0 to 20 parts by weight, preferably from 0.1 to 20 parts by weight, more preferably from 0.2 to 10 parts by weight, and even more preferably from 0.3 to 10 parts by weight, per 100 parts by weight of the organopolysiloxane serving as component (1-A). When adding this organohydrogenpolysiloxane serving as component (1-C), it is desirable to include it in an amount such that the molar ratio of the sum of the silicon-bonded hydrogen atoms (SiH groups) in components (1-B) and (1-C) to the silicon-bonded alkenyl groups in component (1-A) is from 0.5 to 10 mol/mol, preferably from 0.8 to 6 mol/mol, and more preferably from 1 to 5 mol/mol. At less than 0.5 mol/mol, crosslinking is inadequate, and so a sufficient mechanical strength may not be obtained. At more than 10 mol/mol, the physical characteristics after curing may decline, with the heat resistance and compression set in particular worsening considerably.

### [Component (1-D)]

Component (D-1) is a fine reinforcing silica powder. This fine reinforcing silica powder is not particularly limited as to the type of silica, and may be any such powder that is commonly used as a rubber reinforcement. The fine reinforcing silica powder used here may be one that is employed in conventional silicone rubber compositions, particularly one having a specific surface area as determined by the BET method of 50 m²/g or more. The use of precipitated silica, fumed silica or pyrogenic silica having a BET specific surface area of from 50 to 400 m²/g is preferred. Fumed silica is especially desirable because it enhances the rubber strength.

The fine reinforcing silica powder may be a fine silica powder that has been surface treated. In such a case, the fine silica powder may be one which has been directly treated beforehand in the state of a powder. In terms of customary treatment methods, treatment may be carried out by a commonly known technique, such as that of placing the untreated fine silica powder and the surface treatment agent in an internal mixer sealed at normal pressure or a fluidized bed, and mixing at room temperature or under heat treatment in the presence of, where necessary, an inert gas. In some cases, treatment may be accelerated by using a catalyst. The treated silica fine powder can be produced by drying subsequent to intensive mixture.

Alternatively, surface hydrophobizing treatment of the fine reinforcing silica powder (1-D) may involve carrying out surface hydrophobizing treatment in situ, i.e., at the same time as preparation of the liquid silicone rubber composition by, in the course of the composition preparation step, uniformly mixing the alkenyl group-containing organopolysiloxane (base polymer) serving as component (1-A) and untreated fine reinforcing silica powder together with a surface treatment agent under heating.

Illustrative examples of the treatment agent include silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane and chloropropyltrimethoxysilane; and organosilicon compounds such as polymethylsiloxane and organohydrogenpolysiloxane. Surface treatment with these enables the fine silica powder to be used as a hydrophobic powder. The treatment agent is most preferably a silane-type coupling agent or a silazane.

The content of the treatment agent should be no less than the amount calculated from the coating surface area for the treatment agent.

The content of component (1-D) per 100 parts by weight of component (1-A) is from 0 to 100 parts by weight, preferably from 5 to 80 parts by weight, and more preferably from 10 to 50 parts by weight. This component need not be added, although the mechanical strength of the cured rubber may weaken and problems with the film strength may arise in such a case. When the content is more than 100 parts by weight, loading becomes difficult and the workability and processability of the composition may worsen.

### [Component (1-E)]

Component (1-E) is an addition reaction catalyst. This addition reaction catalyst is exemplified by platinum group metal catalysts, including platinum catalysts such as platinum black, platinic chloride, reaction products of chloroplatinic acid with monohydric alcohols, complexes of chloroplatinic acid and olefins, and platinum bisacetoacetate; palladium catalysts; and rhodium catalysts.

This addition reaction catalyst is added in a catalytic amount. The amount, expressed in terms of the weight of the platinum group metal such as platinum, palladium or rhodium metal, is generally from 0.1 to 1,000 ppm, and especially from 1 to 200 ppm, based on component (1-A).

Aside from the above components, the liquid silicone rubber composition used in the first coating layer of the invention may also have added thereto, depending on the intended purpose, various types of additives, including the following inorganic fillers: metal oxides such as titanium oxide, iron oxide, cerium oxide, vanadium oxide, cobalt oxide, chromium oxide, manganese oxide, as well as composites thereof; quartz powder, diatomaceous earth, calcium carbonate, magnesium carbonate, alumina, carbon, hollow glass beads, hollow resin beads, inorganic powders having electrical conductivity, such as gold, silver or copper; and plating powder. Also, paints, heat-resisting agents, flame retardants, plasticizers, reaction regulators and the like may be added, insofar as doing so does not detract from the intended properties. These optional ingredients may be added in customary amounts within ranges that do not compromise the advantageous effects of the invention.

The liquid silicone rubber composition used in the first coating layer of the invention may be obtained simply by uniformly mixing together, at a normal temperature, above components (1-A), (1-B) and (1-E), and also, where necessary, components (1-C) and (1-D) and any optional ingredients. Generally, a composition having a viscosity at 23°C of about 50 to 20,000 Pa·s, and especially about 100 to 5,000 Pa·s, can be advantageously used.

The cured form of the silicone rubber composition used in the first coating layer preferably has a hardness, as measured with a type A durometer in accordance with JIS K6249, of at least 50 (generally, from 50 to 80), and especially about 50 to 60. When the hardness is too low, the resulting leather may lack stiffness. The hardness may be set within this range by suitably adjusting, for example, the alkenyl group content in component (1-A) and the amount of component (1-A) added, the SiH group contents in components (1-B) and (1-C) and the amounts of components (1-B) and (1-C) added, and the specific surface area and loadings of the fine reinforcing silica powder.

### <Second Coating Layer>

The second coating layer is formed on the outside surface of the first coating layer which has been formed on the surface of a fabric base. A silicone rubber composition that contains a silicone resin component (a silicone resin component having a three-dimensional network structure) is used to form this second coating layer. The purpose of the second coating layer is to eliminate surface tack and impart slip characteristics to the surface. A silicone rubber composition containing components (2-A) to (2-D) below may be used as the second coating layer:
(2-A) an organopolysiloxane containing at least two silicon-bonded alkenyl groups per molecule;
(2-B) a silicone resin which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole per mole of the SiO_{4/2} units;
(2-C) an organohydrogenpolysiloxane containing at least two silicon-bonded hydrogen atoms per molecule; and
(2-D) an addition reaction catalyst.

### [Component (2-A)]

Component (2-A) is an organopolysiloxane having at least two silicon-bonded alkenyl groups per molecule, and may be an organopolysiloxane similar to component (1-A) of the liquid silicone rubber composition used in the first coating layer.

### [Component (2-B)]

Component (2-B) is a silicone resin (organopolysiloxane having a three-dimensional network (resinous) structure) which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole, preferably from 0 to 0.5 mole, and even more preferably from 0 to 0.3 mole, per mole of the SiO_{4/2} units.

When the molar ratio of R₃SiO_{1/2} units (M units) to SiO_{4/2} units (Q units) is smaller than 0.5, the compatibility with other ingredients within the silicone rubber composition used for the second coating layer may end up worsening; when the molar ratio is larger than 1.5, the hardness of the cured form of the silicone rubber composition used in the second coating layer (i.e., the hardness of the second silicone coating layer) may end up decreasing. Therefore, the molar ratio of M units to Q units is in the range of 0.5 to 1.5, and preferably in the range of 0.7 to 1.2.

Each R is independently a substituted or unsubstituted monovalent hydrocarbon group of 1 to 8, and especially 1 to 6, carbon atoms. Illustrative examples include alkyl groups such as methyl, ethyl, n-propyl, isopropyl, n-butyl, isobutyl, tert-butyl, pentyl and hexyl groups; cycloalkyl groups such as cyclopentyl and cyclohexyl groups; alkenyl groups such as vinyl, allyl, isopropenyl, butenyl, pentenyl and hexenyl groups; phenyl groups; and halogen-substituted alkyl groups such as chloromethyl, 3-chloropropyl, 1-chloro-2-methylpropyl and 3,3,3-trifluoropropyl groups. Of these, methyl, vinyl and phenyl groups are preferred, with methyl groups being especially preferred.

The number-average molecular weight of the organopolysiloxane serving as component (2-B) is preferably from 500 to 100,000, and especially from 1,000 to 50,000. When the number-average molecular weight is too low, the slip characteristics of the surface of the second silicone coating layer may decrease; when it is too high, the viscosity may increase and the solubility may worsen.

When this organopolysiloxane contains alkenyl groups, the alkenyl group content within the organopolysiloxane is preferably from 0.0001 to 0.05 mol/g, and especially from 0.001 to 0.01 mol/g. At an alkenyl group content that is too low, the hardness of the second silicone coating layer may decline and the surface slip may be low; when the alkenyl group content is too high, the surface layer may become brittle.

The organopolysiloxane itself of component (2-B) can be obtained by cohydrolyzing and condensing alkoxy group-containing silane compounds corresponding to each of the above units in an organic solvent by a known method. For example, R₃SiOMe and Si(OMe)₄ may be cohydrolyzed and condensed within an organic solvent together with, if desired, R₂Si(OMe)₂ and/or RSi(OMe)₃ (in these formulas, each R is independently as defined above, and Me stands for a methyl group).

The organic solvent is preferably one which can dissolve the organopolysiloxane that forms by a co-hydrolytic condensation reaction. Typical examples include toluene, xylene, naphtha and mineral spirits. The molar ratios of the respective units included in component (2-B) may be suitably set by, for example, adjusting the charged amounts (molar ratios) of the silane compounds corresponding to the respective units.

The content of component (2-B) is from 1 to 300 parts by weight, preferably from 10 to 200 parts by weight, and more preferably from 20 to 150 parts by weight, per 100 parts by weight of component (2-A). When the component (2-B) content is too small, it may not be possible to reduce the surface tack of the second coating layer. On the other hand, when the component (2-B) content is too large, the composition becomes thicker, which may make uniform compounding difficult, or the workability worsens, which may make uniform application difficult.

### [Component (2-C)]

Component (2-C) is an organohydrogenpolysiloxane containing at least two silicon-bonded hydrogen atoms per molecule. This may be an organohydrogenpolysiloxane similar to component (1-C) in the liquid silicone rubber composition used in the first coating layer (that is, one lacking an arylene skeleton and a trivalent or tetravalent group with the arylene skeleton from which 1 or 2 hydrogen atoms have been removed).

The content of component (2-C) is from 0.1 to 50 parts by weight, preferably from 0.1 to 20 parts by weight, and more preferably from 0.2 to 15 parts by weight, per 100 parts by weight of component (2-A). It is desirable to include component (2-C) in an amount such that the molar ratio of silicon-bonded hydrogen atoms (SiH groups) in component (2-C) to the sum of the silicon-bonded alkenyl groups in components (2-A) and (2-B) is from 0.5 to 10 mol/mol, preferably from 0.8 to 6 mol/mol, and more preferably from 1 to 5 mol/mol. At less than 0.5 mol/mol, crosslinking is inadequate and a sufficient mechanical strength may not be achieved, or the suppression of surface tack may be inadequate. On the other hand, at more than 10 mol/mol, the physical characteristics after curing may decline, with the heat resistance and compression set in particular sometimes worsening dramatically.

### [Component (2-D)]

Component (2-D) is an addition reaction catalyst. This may be an addition reaction catalyst similar to component (1-E) in the liquid silicone rubber composition used in the first coating layer.

Component (2-D) is added in a catalytic amount. The amount, expressed in terms of the weight of the platinum family metal such as platinum, palladium or rhodium metal, is generally from 0.1 to 1,000 ppm, and especially from 1 to 200 ppm, based on component (2-A).

Aside from the above components, the silicone rubber composition used in the second coating layer of the invention may also have added thereto, depending on the intended purpose, various types of additives, including the following inorganic fillers: metal oxides such as titanium oxide, iron oxide, cerium oxide, vanadium oxide, cobalt oxide, chromium oxide, manganese oxide, as well as composites thereof; quartz powder, diatomaceous earth, calcium carbonate, magnesium carbonate, alumina, carbon, hollow glass beads, hollow resin beads, inorganic powders having electrical conductivity such as gold, silver or copper; and plating powder. Also, paints, heat-resisting agents, flame retardants, plasticizers, reaction regulators and the like may be added, insofar as doing so does not detract from the intended properties. These optional ingredients may be added in the customary amounts within ranges that do not compromise the advantageous effects of the invention.

The silicone rubber composition used in the second coating layer of the invention may be obtained simply by uniformly mixing together, at a normal temperature, above components (2-A) to (2-D), and also, where necessary, the optional ingredients. Generally, a composition having a viscosity at 23°C of about 10 to 1,000 Pa·s, and especially about 20 to 500 Pa·s, can be advantageously used.

The cured form of the silicone rubber composition used in the second coating layer preferably has a hardness, as measured with a type A durometer in accordance with JIS K6249, of at least 50 (generally, from 50 to 90), and especially about 60 to 85. When the hardness is too low, the surface slip may decrease. A hardness within the above range can be achieved by including a given amount of the silicone resin component (silicone resin component having a three-dimensional network structure) in the silicone rubber composition.

The first method of manufacturing the silicone rubber-coated fabric-based molded product of the invention is a method wherein the surface of a fabric base is laminated with a first coating layer and a second coating layer by the steps of, in order to increase adhesion, applying an adhesion-imparting ingredient-containing liquid silicone rubber composition onto at least one surface of a fabric base and curing the composition so as to form a first coating layer consisting of the cured form of this composition, and subsequently, in order to impart slip properties, applying a silicone resin-containing silicone rubber composition onto an outside surface of the first coating layer and curing the silicone resin-containing silicone rubber composition so as to form a second coating layer consisting of the cured form of this composition.

Alternatively, a second manufacturing method may be used which includes the steps of applying a silicone resin-containing silicone rubber composition onto a surface of a release liner and curing the composition so as to form a second coating layer, and subsequently applying an adhesion-imparting ingredient-containing liquid silicone rubber composition onto an outside surface of the second coating layer, laminating thereon a fabric base and curing the liquid silicone rubber composition so as to form a first coating layer.

As a result, a laminated fabric-based molded product can be obtained in which the surface slip of the cured film is dramatically improved, adherence to the fabric base also is good and, because the cured films have stretch, checking and cracking do not arise. Fabric-based molded products manufactured by these methods can be advantageously used as synthetic leather-like sheet-formed products having silicone rubber coating layers laminated on the surface.

In the first manufacturing method, the adhesion-imparting ingredient-containing liquid silicone rubber composition employed in the first coating layer is used by being applied onto a fabric base and cured. In the second production method, this composition is used by applying the composition onto a second coating layer, placing and laminating a fabric base thereon, and then curing the composition.

The method used here to apply the liquid silicone rubber composition may be a coating method known to the industry, such as brush coating, spray coating or dip coating. The coating layer that is applied may have any thickness, although the composition is generally applied to a thickness of about 1 to 1,000 µm.

Following application of the composition, curing is carried out by heating at from 50 to 200°C for about 1 to 20 minutes. When the curing temperature is low, curing takes time; when the curing temperature is too high, the fabric base may undergo deterioration due to the heat. Hence, a curing temperature of from 100 to 150°C is preferred.

The silicone resin-containing silicone rubber composition used in the second coating layer is a composition that manifests slipperiness on the surface, and is laminated onto the first coating layer.

Although any method may be used here for applying and laminating the silicone rubber composition, preferred use can be made of, as a third manufacturing method, the method of applying the silicone rubber composition used in the second coating layer onto a release liner, subsequently bonding this onto the fabric to which the first coating layer has been laminated, and then curing.

The silicone rubber composition used in the second coating layer may have any coating thickness, although the composition is typically applied to a thickness of about 1 to 1,000 µm.

The curing conditions after bonding are not particularly limited, with conditions similar to those for curing the first coating layer being selected, and curing being carried out by heating at from 50 to 200°C, especially from 100 to 150°C, for about 1 to 20 minutes.

The fabric base used in this invention is made of synthetic fibers such as polyester (e.g., polyethylene terephthalate (PET)), nylon, polyamide or polyolefin fibers, or of natural fibers such as cellulose fibers.

The release liner used may be made of, for example, paper and polypropylene, polytetrafluoroethylene, polyethylene terephthalate or the like. The release liner is peeled off and removed at the time of use.

### EXAMPLES

The invention is illustrated more fully below by way of Working Examples and Comparative Examples, although these Examples are not intended to limit the invention. The degrees of polymerization and molecular weights of the respective ingredients are polystyrene-equivalent weight-average values as determined by gel permeation chromatography (GPC). The viscosities are values measured with a rotational viscometer. Also, all references to "parts" are by weight.

### [Working Example 1]

A first liquid silicone rubber composition containing the adhesion-imparting ingredient indicated below was applied onto the surface of a fabric base made of PET fibers in an amount such as to give a thickness of 100 µm, following which it was cured by heating in a drying oven at 120°C for 5 minutes.

Next, a second silicone rubber composition containing the silicone resin indicated below was applied onto a release liner to a thickness of 50 µm. This second silicone rubber composition layer coated onto the release liner was then bonded to the side of the fabric base on which the first liquid silicone rubber composition had been applied and cured by heating. The bonded assembly was cured in a drying oven at 120°C for 5 minutes, thereby giving a silicone rubber-laminated PET fiber fabric base.

### [First Liquid Silicone Rubber Composition]

The following ingredients were mixed together for 30 minutes at room temperature (25°C): 84 parts of dimethylpolysiloxane (1-A1) (vinyl group content, 3×10⁻⁵ mol/g) capped at both ends of the molecular chain with dimethylvinylsiloxy groups and having a viscosity at 23°C of 30 Pa·s (average degree of polymerization, about 750), 5 parts of dimethylpolysiloxane (1-A2) (vinyl group content, 6.5×10⁻⁴ mol/g) capped at both ends of the molecular chain with trimethylsiloxy groups, having an average degree of polymerization of about 230 and containing 5 mol% of vinylmethylsiloxane units on side chains (at non-terminal positions along the molecular chain), 40 parts of fumed silica (1-D1) that has a BET specific surface area of 300 m²/g and is not surface-treated (Aerosil 300, from Nippon Aerosil Co., Ltd.), 8 parts of hexamethyldisilazane as a surface hydrophobizing treatment agent, and 2 parts of water. The temperature of the mixture was then raised to 150°C and stirring was continued for 3 hours, following which the mixture was cooled, thereby carrying out surface hydrophobizing treatment of the fumed silica and also obtaining a silicone rubber base.

A liquid silicone rubber composition (viscosity at 23°C, 400 Pa·s) was obtained by uniformly mixing together the following for about 30 minutes: 129 parts of the above silicone rubber base, 40 parts of dimethylpolysiloxane (1-A1) (vinyl group content, 3×10⁻⁵ mol/g) capped at both ends of the molecular chain with dimethylvinylsiloxy groups and having a viscosity at 23°C of 30 Pa·s (average degree of polymerization, about 750), 2.4 parts of, as a crosslinking agent, methylhydrogenpolysiloxane (1-C1) having pendant SiH groups (a dimethylsiloxane-methylhydrogensiloxane copolymer having a viscosity at 25°C of 0.010 Pa·s, 34 SiH groups per molecule (SiH group content, 0.0050 mol/g) and capped at both ends with trimethylsiloxy groups), 2.0 parts of an adhesion-imparting ingredient having the phenylene skeleton of formula (1) below (1-B1) (SiH group content, 0.0066 mol/g) [sum of SiH groups in (1-C1) and (1-B1)/sum of vinyl groups in (1-A1) and (1-A2) = 2.8 mol/mol], 0.10 part of ethynylcyclohexanol as a reaction regulator, and 0.2 part of platinum catalyst (1-E1) (Pt concentration, 1 wt%).

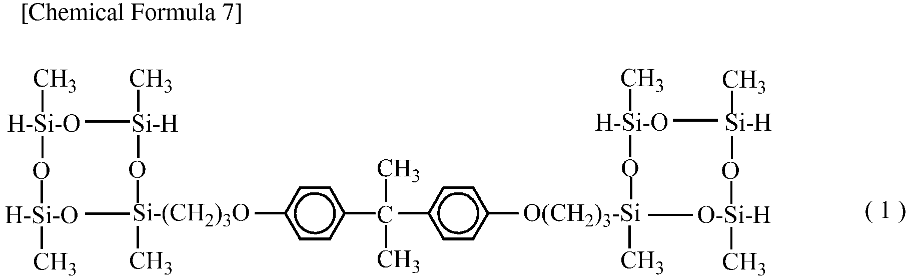

### [Second Silicone Rubber Composition]

A silicone rubber composition (viscosity at 23°C, 35 Pa·s) was obtained by uniformly mixing together the following for about 30 minutes: 84 parts of dimethylpolysiloxane (2-A1) (vinyl group content, 3×10⁻⁵ mol/g) capped at both ends of the molecular chain with dimethylvinylsiloxy groups and having a viscosity at 23°C of 30 Pa·s (average degree of polymerization, about 750), 84 parts of organopolysiloxane resin (2-B 1) (number-average molecular weight, 30,000) that has a three-dimensional network structure and consists of (CH₃)₃SiO_{1/2} units, (CH₂=CH)(CH₃)₂SiO_{1/2} units and SiO_{4/2} units, with the molar ratio (CH₃)₃SiO_{1/2}/(CH₂=CH)(CH₃)₂SiO_{1/2}/SiO_{4/2} being 40/10/50 and the vinyl group content being 0.00054 mol/g, 14.5 parts of, as a crosslinking agent, methylhydrogenpolysiloxane (2-C1) having pendant SiH groups (a methylhydrogenpolysiloxane having a viscosity at 23°C of 20 mPa·s, 40 SiH groups per molecule (SiH group content, 0.016 mol/g) and capped at both ends with trimethylsiloxy groups [SiH groups in (2-Cl)/sum of vinyl groups in (2-A1) and (2-B1) = 3.5 mol/mol], 0.10 part of ethynylcyclohexanol as a reaction regulator, and 0.2 part of a platinum catalyst (Pt concentration, 1 wt%).

### [Working Example 2]

Aside from using 100 parts of organopolysiloxane resin (2-B2) (number-average molecular weight, 5,000; vinyl group content, 0.00027 mol/g) that has a three-dimensional network structure and consists of (CH₃)₃SiO_{1/2} units, (CH₂=CH)(CH₃)₂SiO_{1/2} units and SiO_{4/2} units, with the molar ratio (CH₃)₃SiO_{1/2}/(CH₂=CH)(CH₃)₂SiO_{1/2}/SiO_{4/2} being 40/5/55, instead of organopolysiloxane resin (2-B 1) in the second silicone rubber composition, a silicone rubber-laminated PET fiber fabric base was obtained in the same way as in Working Example 1.

### [Comparative Example 1]

Aside from not including an adhesion-imparting ingredient having a phenylene skeleton (1-B1) in the first liquid silicone rubber composition [SiH groups in (1-C1)/sum of vinyl groups in (1-A1) and (1-A2) = 1.8 mol/mol], a silicone rubber-laminated PET fiber fabric base was obtained in the same way as in Working Example 1.

### [Comparative Example 2]

Aside from using an additional 84 parts (for a total of 168 parts) of dimethylpolysiloxane (2-A1) (vinyl group content, 3×10⁻⁵ mol/g) capped at both ends of the molecular chain with dimethylvinylsiloxy groups and having a viscosity at 23°C of 30 Pa·s (average degree of polymerization, about 750) instead of organopolysiloxane resin (2-B1) in the second silicone rubber composition, and 0.56 part of, as a crosslinking agent, methylhydrogenpolysiloxane (2-C1) having SiH groups [a methylhydrogenpolysiloxane capped at both ends with trimethylsiloxy groups; viscosity at 23°C, 20 mPa·s; number of SiH groups per molecule, 40 (SiH group content, 0.016 mol/g)], such that the ratio of SiH groups in (2-C1)/vinyl groups in (2-A1) = 3.0 mol/mol, a silicone rubber-laminated PET fiber fabric base was obtained in the same way as in Working Example 1.

The physical properties (hardness, tensile strength, elongation at break) of the cured forms of the above silicone resin-containing second silicone rubber compositions were measured in accordance with JIS K6249. The cured forms of the silicone rubber compositions were produced by press molding at 120°C for 10 minutes.

Also, with regard to the PET fiber fabric bases obtained, adhesion to the fabric base and surface slip were measured by the following methods and evaluated according to the criteria indicated below. The results are presented in Table 1.

In each of the Working Examples and Comparative Examples, the hardness of the cured form of the first silicone rubber composition, as determined with a type A durometer, was 52.

### [Adhesion to Fabric Base]

The adhesion test was carried out using a Scott-type crease-flex tester under the following conditions. That is, a crease-flex test was carried out ten times at a pressing force of 5 kgf on the above rubber-coated fabric base, following which the state of failure in the coated portion was visually examined. Cases in which the silicone rubber coating layer has not separated from the fabric base are rated as "Good" (adheres), and cases in which the silicone rubber coating layer has separated from the fabric base are rated as "NG" (peeled).

### <Evaluation>

Good: adheres
NG: peeled (separation between the silicone layer and the base fabric)

### [Surface Slip]

The slipperiness of the surface was evaluated by measuring the dynamic coefficient of friction under the following conditions. That is, the dynamic coefficient of friction was measured using a Type 14FW Surface Property Tester (Shinto Scientific Co., Ltd.) in accordance with ASTM D1894 under the following conditions: load, 100 gf; tensile test speed, 500 mm/min. Specimens having a dynamic coefficient of friction of 0.5 or less were rated as having good slip characteristics (Good), and those having a dynamic coefficient of friction greater than 0.5 were rated as having poor slip characteristics (NG).

### <Evaluation>

Good: Surface slip is good
NG: Surface slip is poor

**[Table 1]**

| | Working Example 1 | Working Example 2 | Comparative Example 1 | Comparative Example 2 |
|---|---|---|---|---|
| Physical properties of cured form of second silicone rubber composition | | | | |
| Hardness (type A durometer) | 79 | 70 | 79 | 40 |
| Tensile strength (MPa) | 5.8 | 5.5 | 5.8 | 0.8 |
| Elongation at break (%) | 50 | 210 | 50 | 250 |
| Evaluation of PET fiber fabric base | | | | |
| Adhesion to fabric base | Good | Good | NG | NG |
| Surface slip | Good | Good | Good | NG |

## Claims

1. A method of manufacturing a fabric-based molded product comprising the steps of applying an adhesion-imparting ingredient-containing liquid silicone rubber composition onto at least one surface of a fabric base and curing the composition so as to form a first coating layer, and subsequently applying a silicone resin-containing silicone rubber composition onto an outside surface of the first coating layer and curing the silicone resin-containing silicone rubber composition so as to form a second coating layer.

2. A method of manufacturing a fabric-based molded product comprising the steps of applying a silicone resin-containing silicone rubber composition onto a surface of a release liner and curing the composition so as to form a second coating layer, and subsequently applying an adhesion-imparting ingredient-containing liquid silicone rubber composition onto an outside surface of the second coating layer, laminating thereon a fabric base and curing the liquid silicone rubber composition so as to form a first coating layer.

3. A method of manufacturing a fabric-based molded product comprising the steps of applying an adhesion-imparting ingredient-containing liquid silicone rubber composition onto at least one side of a fabric base and curing the composition so as to form a first coating layer, and applying a silicone resin-containing silicone rubber composition onto a surface of a release liner, laminating the silicone resin-containing silicone rubber composition-coated surface of the release liner onto the first coating layer and then curing the silicone resin-containing silicone rubber composition so as to form a second coating layer on the first coating layer.

4. The method of manufacturing a silicone rubber-coated fabric-based molded product of any one of claims 1 to 3, wherein the liquid silicone rubber composition used in the first coating layer comprises:
(1-A) 100 parts by weight of an organopolysiloxane which contains at least two silicon-bonded alkenyl groups per molecule and has a viscosity at 23°C of from 0.1 to 2,000 Pa·s,
(1-B) from 0.1 to 30 parts by weight of an organosilicon compound of from 1 to 100 silicon atoms which has, per molecule, at least one silicon-bonded hydrogen atom and at least one arylene skeleton and/or a trivalent or tetravalent group with the arylene skeleton from which 1 or 2 hydrogen atoms have been removed,
(1-C) from 0 to 20 parts by weight of an organohydrogenpolysiloxane which has at least two silicon-bonded hydrogen atoms per molecule and lacks an arylene skeleton and a trivalent or tetravalent group with the arylene skeleton from which 1 or 2 hydrogen atoms have been removed,
(1-D) from 0 to 100 parts by weight of a fine reinforcing silica powder, and
(1-E) a catalytic amount of an addition reaction catalyst;
and wherein the silicone rubber composition used in the second coating layer comprises:
(2-A) 100 parts by weight of an organopolysiloxane containing at least two silicon-bonded alkenyl groups per molecule,
(2-B) from 1 to 300 parts by weight of a silicone resin which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole per mole of SiO_{4/2} units,
(2-C) from 0.1 to 50 parts by weight of an organohydrogenpolysiloxane containing at least two silicon-bonded hydrogen atoms per molecule, and
(2-D) a catalytic amount of an addition reaction catalyst.

5. The method of manufacturing a silicone rubber-coated fabric-based molded product of claim 4, wherein component (1-B) is an organosilicon compound of from 1 to 100 silicon atoms which has at least one silicon-bonded hydrogen atom per molecule, has at least one arylene skeleton and/or a trivalent or tetravalent group with the arylene skeleton from which 1 or 2 hydrogen atoms have been removed per molecule, and has one, two or more functional groups selected from among epoxy, alkoxysilyl, ester, acrylic, methacrylic, carboxylic anhydride, isocyanate, amino and amide groups.

6. The method of manufacturing a silicone rubber-coated fabric-based molded product of any one of claims 1 to 5, wherein the cured form of the silicone rubber composition used in the first coating layer has a hardness, as measured with a type A durometer in accordance with JIS K6249, of 50 or more.

7. The method of manufacturing a silicone rubber-coated fabric-based molded product of any one of claims 1 to 6, wherein the cured form of the silicone rubber composition used in the second coating layer has a hardness, as measured with a type A durometer in accordance with JIS K6249, of 50 or more.

8. A synthetic leather-like sheet-formed product comprising, as silicone rubber coating layers, a first coating layer formed on a surface of a fabric base and a second coating layer laminated onto the first coating layer, wherein the first coating layer is a cured form of an adhesion-imparting ingredient-containing liquid silicone rubber composition, and the second coating layer is a cured form of a silicone resin-containing silicone rubber composition.

9. The synthetic leather-like sheet-formed product of claim 8, wherein the liquid silicone rubber composition used in the first coating layer comprises:
(1-A) 100 parts by weight of an organopolysiloxane which contains at least two silicon-bonded alkenyl groups per molecule and has a viscosity at 23°C of from 0.1 to 2,000 Pa·s,
(1-B) from 0.1 to 30 parts by weight of an organosilicon compound of from 1 to 100 silicon atoms which has, per molecule, at least one silicon-bonded hydrogen atom and at least one arylene skeleton and/or a trivalent or tetravalent group with the arylene skeleton from which 1 or 2 hydrogen atoms have been removed,
(1-C) from 0 to 20 parts by weight of an organohydrogenpolysiloxane which has at least two silicon-bonded hydrogen atoms per molecule and lacks an arylene skeleton and a trivalent or tetravalent group with the arylene skeleton from which 1 or 2 hydrogen atoms have been removed,
(1-D) from 0 to 100 parts by weight of a fine reinforcing silica powder, and
(1-E) a catalytic amount of an addition reaction catalyst;
and wherein the silicone rubber composition used in the second coating layer comprises:
(2-A) 100 parts by weight of an organopolysiloxane containing at least two silicon-bonded alkenyl groups per molecule,
(2-B) from 1 to 300 parts by weight of a silicone resin which has R₃SiO_{1/2} units (wherein each R is independently a substituted or unsubstituted monovalent hydrocarbon group of 1 to 6 carbon atoms) and SiO_{4/2} units, the number of moles of R₃SiO_{1/2} units per mole of SiO_{4/2} units being from 0.5 to 1.5 moles, and which may further have R₂SiO_{2/2} units and RSiO_{3/2} units (with R in each of these formulas being as defined above) in respective amounts of from 0 to 1.0 mole per mole of SiO_{4/2} units,
(2-C) from 0.1 to 50 parts by weight of an organohydrogenpolysiloxane containing at least two silicon-bonded hydrogen atoms per molecule, and
(2-D) a catalytic amount of an addition reaction catalyst.

10. The synthetic leather-like sheet-formed product of claim 9, wherein component (1-B) is an organosilicon compound of 1 to 100 silicon atoms which has at least one silicon-bonded hydrogen atom per molecule, has at least one arylene skeleton and/or a trivalent or tetravalent group with the arylene skeleton from which 1 or 2 hydrogen atoms have been removed per molecule, and has one, two or more functional groups selected from among epoxy, alkoxysilyl, ester, acrylic, methacrylic, carboxylic anhydride, isocyanate, amino and amide groups.

11. The synthetic leather-like sheet-formed product of any one of claims 8 to 10, wherein the cured form of the silicone rubber composition used in the first coating layer has a hardness, as measured with a type A durometer in accordance with JIS K6249, of 50 or more.

12. The synthetic leather-like sheet-formed product of any one of claims 8 to 11, wherein the cured form of the silicone rubber composition used in the second coating layer has a hardness, as measured with a type A durometer in accordance with JIS K6249, of 50 or more.
